# EUROPÄISCHE PATENTANMELDUNG

(11) **EP 4 711 096 A1**
(43) Veröffentlichungstag der Anmeldung: **18.03.2026**
(21) Anmeldenummer: 25200327.2
(22) Anmeldetag: 04.09.2025
(51) Int. Cl.: B25J 9/16, B63G 8/00, B29D 23/00, F16L 1/00, B23K 37/00

(54) **DIGITALER ROHRKORBBAU UND PASSROHRFERTIGUNG**

(30) Priorität: 12.09.2024 DE 102024126216
(71) Anmelder: TKMS GmbH, 24143 Kiel (DE); thyssenkrupp AG, 45143 Essen (DE)
(72) Erfinder: Reinhold, Jan, 24116 Kiel (DE)
(74) Vertreter: thyssenkrupp Intellectual Property GmbH

(57) **Zusammenfassung**

Die vorliegende Erfindung betrifft ein Verfahren zur Herstellung eines Passrohres 50 bei der Fertigung eines Unterseebootes, wobei ein anlernfähiger Roboter 30 mit einem Mehrgelenksarm in das Innere des Unterseebootes verbracht und dort ortsfest montiert wird, wobei der Mehrgelenksarm in passiver Weise von einem Endpunkt des Passrohres 50 zum anderen geführt wird, wobei der Roboter 30 dabei die Bewegungskontur 40 erfasst und als Verlaufsform des Passrohres 50 gespeichert wird, wobei das Passrohr 50 nach der erfassten Bewegungskontur 40 gefertigt wird.

Anmerkung: Siehe oben.

## Beschreibung

Die Erfindung betrifft ein Verfahren zur formgenauen Herstellung eines Passrohres im Unterseebootsbau.

Unterseeboote werden üblicherweise sektionsweise gebaut, also als einzelne zylindrische Röhren, die zunächst getrennt gefertigt und größtenteils Innen ausgebaut werden. Dadurch können auch große Komponenten in einfacher Weise eingebracht werden. Ein Beispiel hierfür ist der Motor, welcher durch kein Luk einbringbar oder entfernbar ist, also nur bei einem aufgetrennten Rumpf eingebaut werden kann. Ebenso werden in den einzelnen Sektionen Rohre und Leitungen verlegt, deren Medien über die Sektionen hinaus transportiert werden müssen. Diese Röhren müssen dann, wenn die Sektionen miteinander verbunden worden sind, ebenfalls noch verbunden werden, um eine durchgehende Leitung der Fluide zu realisieren. Es gibt im Unterseebootsbau dazu passende Bauunterlagen, welche die Soll-Positionen für alle Komponenten enthalten, beispielsweise auch für alle Röhren, sowie deren Verbindungsstücke zwischen den Sektionen. Die Bauunterlagen stellen den Planungs- beziehungsweise Sollzustand dar.

Durch die Verbindungen der Sektionen und die unterschiedlichen Fluide in einem Unterseeboot ergibt sich, dass sehr viele Verbindungen für diverse Fluide hergestellt werden müssen. Gleichzeitig unterliegt die Fertigung eines Unterseebootes Schwankungen, beispielsweise auch in der exakten Neigung der Flansche relativ zueinander, da die Flansche eine flächige Verbindung sind und damit deren Neigung relevant ist. Es kommt also zu einer Abweichung zwischen der Sollposition in der Bauunterlage und der realen Position nach der Fertigung. Um die Verbindung zwischen zwei Flanschen in zwei benachbarten Sektionen herzustellen, werden sogenannte Passrohre gefertigt. Die Passrohre, welche Verbindung zwischen zwei Sektionen herstellen sollen, müssen somit passgenau gefertigt werden, um die beiden Flansche zu verbinden. Flansche bilden die jeweiligen Enden der in den Sektionen bereits angebrachten Rohre und sind jeweils die Übergangsverbindung zu dem Passrohr. Somit reicht die Genauigkeit der technischen Zeichnungen der Bauunterlage nicht aus, um ein exakt passendes Passrohr herzustellen, da diese die Abweichungen zwischen der Sollposition und der realen Position nach der Fertigung nicht berücksichtigen. Und hierbei sind nicht nur die exakte Position, also Ort und Orientierung, der Flansche relevant, sondern vielmehr muss auch der Einbauraum des Passrohrs stimmen, da beispielsweise Spanten und weitere Leitungen und Rohre berücksichtigt werden müssen. Der Einbauraum des Passrohres ist in den Bauunterlagen bereits berücksichtigt, die exakte Form und vor allem Orientierung weicht aber bautechnisch bedingt ab, sodass die Flansche eben nicht verbindbar sein können. Daher werden heute zwei Flansche auf die zu verbindenden Rohre gesetzt und diese beiden Flansche dann mit dünnen Rohren oder Stäben verbunden, wobei diese Rohre oder Stäbe auch gebogen werden, wodurch die reale Ausführung wiedergegeben wird. Es ergibt sich ein "Rohrkorb", der den Verlauf vorgibt, dem das später zu fertigende Passrohr folgen muss. Zur Fertigung dieses Rohrkorbs muss jedoch im Inneren des Unterseebootes gearbeitet und vor allem auch geschweißt werden. Außerdem entstehen bei dem Bau eines Unterseebootes sehr viele dieser Rohrkörbe, die selbst für ein baugleiches Schwesterschiff nicht verwendbar sind. Außerdem wird dann aus dem im Bootsinneren gefertigten Rohrkorb ein äußerer Korb gebaut, der den Rohrkorb umgibt und in dem dann das eigentliche Passrohr gefertigt wird.

Versuche der optischen Erfassung waren aufgrund der komplexen Umgebung und der oftmals spiegelnden Oberflächen nicht erfolgreich, um aus den optisch erfassten Daten ein virtuelles Modell des Passrohres zu erstellen.

Aufgabe der Erfindung ist es, die aufwändige Fertigung der Rohrkörbe zu vermeiden und dennoch eine exakte Passrohrfertigung zu ermöglichen.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Verfahren dient zur Herstellung eines Passrohres bei der Fertigung eines Unterseebootes. Hierzu wird ein anlernfähiger Roboter mit einem Mehrgelenksarm in das Innere des Unterseebootes verbracht und dort ortsfest montiert. Das Unterseeboot ist dabei als im Bau befindlich zu verstehen und muss noch nicht fertiggestellt und funktionsfähig sein. Insbesondere ist mit Unterseeboot in diesem Zusammenhang gemeint, dass zumindest zwei Sektionen eines Druckkörpers miteinander verbunden sind und diese zumindest Rohre oder Leitungen beeinhalten. Ein anlernfähiger Roboter ist ein Roboter, der bevorzugt passiv geführt werden kann, also durch einen Benutzer, sich dabei seine Position, beziehungsweise den gesamten Bewegungsablauf, merkt und abspeichert und damit anschließend in der Lage ist, die angefahrenen Positionen, beziehungsweise diesen angelernten Bewegungsablauf, identisch und mit hoher Genauigkeit zu erfassen, auszugeben oder zu reproduzieren. Hierzu werden bevorzugt die Bewegungswinkel des Mehrgelenksarms durch den Roboter erfasst, ausgelesen und gespeichert. So kann die Position in relativer Weise, aber sehr genau erfasst, gespeichert und reproduziert werden. Die bevorzugte passive Führung wird bei Robotern verwendet, um komplexe Bewegungsabläufe in einfacher Weise einzutrainieren, anstelle diese komplex zu programmieren. Zudem werden auf diese Weise Bewegungen sicher vermieden, die mit anderen im Bewegungsbereich befindlichen Gegenständen kollidieren würden, da der Mehrgelenksarm beim Anlernen nicht in eine solche kollidierende Position bewegt werden kann. Der Mehrgelenksarm wird bevorzugt in passiver Weise zu einem ersten Endpunkt des Passrohres und zu einem zweiten Endpunkt geführt. Die Endpunkte sind Flansche, an die das Passrohr später befestigt werden soll. Da ein Flansch eben eine flächige Montage erfordert ist der genaue Winkel des Flansches (dessen Orientierung im Raum) essentiell. Der Roboter erfasst dabei exakt die Position und Orientierung des ersten Endpunktes und des zweiten Endpunktes. Durch die Erfassung beider Endpunkte ist eine relative Messung ausreichend und die Bestimmung der absoluten Position ist nicht notwendig. Es werden also genau die relativen Positionen und vor allem die Orientierung der Flansche erfasst und zwar in der exakten realen Anordnung und Orientierung, die alle Abweichungen im Fertigungsprozess damit berücksichtigt. Das Passrohr wird nach der exakten Position und Orientierung des ersten Endpunktes und des zweiten Endpunktes gefertigt und kann damit später in das Unterseeboot eingebracht und passgenau auf den beiden Flanschen montiert werden.

Diese mechanische Erfassung hat sich unter den komplexen Bedingungen im Inneren eines Unterseebootes, was erfindungsgemäß auch bereits einen Teil davon umfasst, als gegenüber allen anderen Erfassungsmethoden, insbesondere optischen Methoden als vorteilhaft erwiesen.

Die exakte Position und Orientierung des Flansches, beziehungsweise der wenigstens zwei Flansche, kann dabei beispielsweise dadurch bestimmt werden, dass der Roboter am Ende seines Arms einen Sensor hat, an eine bestimmte Position des Flansches gebracht werden muss, beispielsweise in einem bestimmten Winkel. Beispielsweise kann dafür eine Markierung an dem Flansch vorgesehen sein, die im 90 ° Winkel berührt werden muss. Es kann auch vorgesehen sein, dass der Roboter an dem jeweiligen Flansch mehrere vorbestimmte Punkte berühren muss, aus denen sich die Lage des Flansches ergibt, beispielsweise drei Punkte am Umfang, die in etwa 120 ° zueinander versetzt sind. Auch hier kann beispielsweise am Flansch für jeden Punkt eine Markierung vorgesehen sein. Als weitere Möglichkeit wäre auch denkbar, dass der Roboter an seinem Ende ein passendes Endstück aufweist, das zumindest teilweise komplemetär zum Flansch ist und auf den einzumessenden Flansch aufgesteckt wird.

In einer weiteren Ausführungsform der Erfindung wird der Mehrgelenksarm in passiver Weise, also von einem Menschen, von einem Endpunkt des Passrohres zum anderen geführt, damit wird der Verlauf des Passrohres automatisch abgefahren. Der Roboter erfasst dabei die Bewegungskontur und speichert diese als Verlaufsform des Passrohres. Das Passrohr wird nach der erfassten Bewegungskontur gefertigt. Hierbei ist eine genaue Positionierung des Roboters nicht nötig, da es nur um den Verlauf des Passrohres geht und damit der exakte Verlauf von einem Ende zum anderen, nicht die exakte Positionierung des Passrohres im Boot. Zugleich werden hierdurch alle Störkonturen, beispielsweise Spanten, andere Rohre und dergleichen, in sehr einfacher Weise bootsindividuell und zuverlässig erfasst, Fehler von "vergessenen" Störkonturen, die zu einer Unbrauchbarkeit des Passrohres führen würden, sind praktisch ausgeschlossen, da der Mehrgelenksarm bereits dort entlang geführt wurde. Eine vorherige Kenntnis eines Bauplanes ist somit in dieser Ausführungsform nicht nötig.

In einer weiteren Ausführungsform der Erfindung wird der Mehrgelenksarm bevorzugt in passiver Weise entlang weiterer Einbauten geführt, beispielsweise Spanten, bereits installierter Passrohre und dergleichen, also Strukturen, die stören und die das Passrohr eben nicht durchqueren kann. Der Roboter erfasst dabei die Negativbewegungskontur, also die Bewegungskontur, die von einem Passrohr eben nicht durchquert werden darf.

Die Verlaufsform des Passrohres wird derart angepasst, dass die Verlaufsform die Negativbewegungskontur nicht berührt.

In einer weiteren Ausführungsform der Erfindung werden die erfassten Daten in eine Bauunterlage übernommen und die Soll-Positionen in der Bauunterlagen vermerkt oder durch die erfassten Ist-Positionen ersetzt. Dieses kann automatisch erfolgen indem die Daten des jeweiligen Flansches ausgelesen werden und über eine Datenleitung an einen verbundenen Computer übertragen werden. Auf dem Computer befinden sich die Daten der Bauunterlage mit der ursprünglichen Sollposition der jeweiligen Flansche. Diese Daten werden dann in der Bauunterlage durch den Computer eingetragen oder mit den realen gemessenen Daten überschrieben beziehungsweise angepasst. Der Computer bestimmt dafür zumindest mit Hilfe der vom Roboter übertragenen Daten die beiden relativen Flanschpositionen zueinander. Die Daten können die vom Roboter gemessenen Positionen oder Armstellungen sein. Die Bauunterlage wird dadurch an die fertigungsbedingte Abweichung angepasst, insbesondere, was die Verkippung der Flansche angeht. Während der Verlauf des Passrohres aus der Bauunterlage im Allgemeinen sehr gut verwendbar ist, ist gerade die Orientierung kritisch, da Flansche zur Montage absolut planparallel sein müssen und sich daher hier die Fertigungsschwankungen sehr stark auswirken.

In einer weiteren Ausführungsform der Erfindung wird der Mehrgelenksarm bevorzugt in passiver Weise zu einem ersten Endpunkt des Passrohres und zu einem zweiten Endpunkt geführt. Als nächstes werden die erfassten Daten in eine Bauunterlage übernommen und die Soll-Positionen in der Bauunterlagen durch die erfassten Ist-Positionen ersetzt. Daraus ergibt sich ein Verlauf des Passrohres. Der Mehrgelenksarm fährt nun den Verlauf des Passrohres ab. Damit wird überprüft, ob der Verlauf realisierbar ist oder ob beispielsweise andere Einbauten dem geplanten Verlauf im Wege stehen. Dieses kann als schnelle Kontrolle bereits beim Ausmessen erfolgen.

In einer weiteren Ausführungsform der Erfindung wird eine Sollform für das Passrohr vorgegeben. Diese kann beispielsweise aus Bauunterlagen aus der Planung vorhanden sein. Aus der Sollform und der exakten Position und Orientierung des ersten Endpunktes und des zweiten Endpunktes wird die reale Form des Passrohres ermittelt. Dieses hat den Vorteil, dass gerade in Bereichen, in denen zum Beispiel mehrere Passrohre oder vergleichbare Verbindungselemente zwischen den Sektionen angeordnet werden müssen, die Sollform der Passrohre beziehungsweise Verbindungselemente schon frühzeitig optimiert werden können.

In einer weiteren Ausführungsform der Erfindung fährt der Roboter die erfasste Bewegungskontur außerhalb des Unterseebootes nach. Die Bewegung des Roboters wird optisch erfasst, beispielsweise mittels einer Kamera oder eines Laserscanners. Die Erfassung außerhalb des Unterseebootes ist eben nicht mehr durch die Komplexität im Inneren des Unterseebootes gestört und daher zuverlässig möglich. Aus der optisch erfassten Bewegung wird die Verlaufsform des Passrohres erzeugt. Dieses ermöglicht in einfacher Weise die Übertragung auf eine nicht mit einem solchen Robotersystem gestützte Fertigung, beispielsweise eben auch eine manuelle Fertigung. Außerdem ermöglicht dieses auch die einfache Übernahme in einen digitalen Zwilling des Unterseebootes, beispielsweise um später zu einem beliebigen Zeitpunkt dieses Passrohr als Ersatzteil erneut fertigen zu können.

In einer weiteren Ausführungsform der Erfindung fährt der Roboter außerhalb des Unterseebootes an einem Schweißtisch, auf dem das Passrohr gefertigt werden soll, den ersten Endpunkt an. Ein Schweißflansch wird am ersten Endpunkt montiert. Dabei kann vorgesehen sein, dass der Roboter den Schweißflansch selbst in der von ihm gemessenen Position hält. Dazu kann beispielsweise der Flansch in einem entsprechenden Endstück am Roboterarm gehalten werden. Das Endstück kann dabei so gestaltet sein, dass es den Unterschied zwischen dem Sensor und dem Endstück kompensiert. Der Roboter fährt auch den zweiten Endpunkt an. Dort wird ein in gleicher Weise ein zweiter Schweißflansch montiert. Damit ist die exakte Geometrie wie im Inneren des Unterseebootes auf dem Schweißtisch hergestellt, sodass eine einfache Fertigung des Passrohres zwischen den beiden Endstücken möglich ist. Das Passrohr wird also zwischen den beiden Schweißflanschen hergestellt und damit auch passgenau für den späteren Einbau im Unterseeboot. Das Herstellen kann hierbei klassisch beispielsweise über das Verschweißen von Rohrstücken erfolgen. Alternativ kann das Herstellen auch mittels additiver Fertigungstechniken erfolgen, was insbesondere bei kleinen und komplex aufgebauten Passrohren bevorzugt ist.

In einer weiteren Ausführungsform der Erfindung wird die Bewegungskontur nur an nicht geraden Stellen, also an Krümmungen und Biegungen, des zu fertigenden Passrohres erfasst. Da die Strecken dazwischen gerade verlaufen ist dieses als Datengrundlage ausreichend. Dieses sind natürlich Start- und Endpunkt mit der exakten Lage der Flansche, wie mögliche dazwischen liegende Knickpunkte. Alleine mit diesen Wegpunkten und Winkeln ist die Form des Passrohres vollständig beschrieben.

In einer weiteren Ausführungsform der Erfindung werden als Bewegungskontur die Gelenkwinkel oder der erste Endpunkt des Passrohres und der zweite Endpunkt des Passrohres des Mehrgelenksarms erfasst. Diese sind präziser zu erfassen und besser zu reproduzieren als absolute Koordinaten. Dadurch lässt sich somit die Genauigkeit erhöhen. Die Erfassung kann hierbei beispielsweise und bevorzugt optisch mit einer oder mehreren Kameras erfolgen. Diese Erfassung ist wesentlich genauer als die direkte Bestimmung der absoluten Position über den Mehrgelenksarm.

In einer weiteren Ausführungsform der Erfindung wird der Roboter bevorzugt in passiver Weise zu einem dritten Endpunkt des Passrohres geführt. Das Passrohr wird also mit drei oder auch noch mehr Flanschen verbunden. Die Fertigung solcher Passrohre mit Verzweigungen sind nach dem erfindungsgemäßen Verfahren besonders gut herstellbar, da weitere Endpunkte sicher und zuverlässig ergänzt werden können. Der Roboter erfasst dabei die Position und Orientierung des dritten Endpunktes, wie dieses auch für den ersten Endpunkt und den zweiten Endpunkt erfolgt. Das Passrohr wird also zusätzlich auch nach der exakten Position und Orientierung des dritten Endpunktes gefertigt.

In einer weiteren Ausführungsform der Erfindung wird der Roboter bevorzugt in passiver Weise zu einem Wegpunkt des Passrohres geführt. Ein Wegpunkt kann beispielsweise eine Schelle, eine Durchführung oder dergleichen sein, also eine konkrete Position, an der das Passrohr sein muss, wobei der Wegpunkt in der Mitte des Passrohres liegt. Der Roboter erfasst dabei die exakte Position und Orientierung des Wegpunktes. Das Passrohr wird zusätzlich zu dem ersten Endpunkt und dem zweiten Endpunkt auch nach der exakten Position und Orientierung des Wegpunktes gefertigt.

In einer weiteren Ausführungsform der Erfindung wird der Roboter bevorzugt in passiver Weise zu einem Referenzpunkt geführt. Referenzpunkte sind im Unterseeboot Punkte, deren exakte Position bekannt und zu denen eine Ausrichtung erfolgt. Da das Verfahren bevorzugt und sehr genau relative Orientierungen erfassen kann ist eine relative Erfassung zu einem absolut bekannten Referenzpunkt eine einfache und zuverlässige Möglichkeit, absolute Ortsinformationen zu erhalten. Dieses ist besonders bevorzugt, wenn die Abweichung der gemessenen Orientierung der Endpunkte größer als ein Schwellenwert ist, insbesondere, wenn die Flansche zum Beispiel um mehr als 10 ° verkippt sind. Damit kann dann die Bauunterlage präziser angepasst und der exakte neue Verlauf des Passrohres zuverlässig ermittelt werden. Durch den Bezugspunkt können dann auch bei der Neuberechnung die Störelemente zuverlässig berücksichtigt werden.

In einer weiteren Ausführungsform der Erfindung erfolgt die Fertigung des Passrohres manuell und wird mittels erweiterter Realität, beispielsweise mittels einer entsprechenden Brille, unterstützt. Da es sich um Unikatsfertigung handelt, ist dieses bevorzugt. Der bisherige äußere Korb kann dabei virtuell in die erweitere Realität projiziert werden, was den Vorteil hat, dass die bisherigen Arbeitsabläufe nur minimal angepasst werden müssen.

In einer weiteren Ausführungsform der Erfindung wird ein weiterer anlernfähiger Roboter mit einem Mehrgelenksarm verwendet. Dieses ist vorteilhaft, wenn der erste Endpunkt und der zweite Endpunkt durch bauliche Maßnahmen, Einbauten oder dergleichen schwer oder nicht mit einem einzigen üblichen Mehrgelenksarm erreichbar sind. Der anlernfähige Roboter und der weitere anlernfähige Roboter erfassen über zumindest einen gemeinsamen Berührungspunkt die relative Anordnung zueinander, es werden also die beiden Mehrgelenksarme so an zumindest einem beliebigen Punkt in Kontakt gebracht und so die relative Anordnung der beiden Roboter zueinander erfasst. Die weiteren gemessenen Positionen und Verläufe können damit zueinander in Relation gebracht werden und die Messdaten der einen Position ins Verhältnis zur einer anderen gemessenen Position des zweiten Roboters gesetzt werden. Der anlernfähige Roboter erfasst zumindest die Position und Orientierung des ersten Endpunktes und der weitere anlernfähige Roboter erfasst zumindest die Position des zweiten Endpunktes.

Nachfolgend ist das erfindungsgemäße Verfahren anhand eines in den Zeichnungen dargestellten Ausführungsbeispiels näher erläutert.
- Fig. 1: Ausgangslage ohne Passrohr
- Fig. 2: Einbringung des Roboters
- Fig. 3: erste Position
- Fig. 4: zweite Position
- Fig. 5: dritte Position
- Fig. 6: vierte Position
- Fig. 7: fünfte Position
- Fig. 8: Ausbringen des Roboters
- Fig. 9: erste Position
- Fig. 10: zweite Position
- Fig. 11: dritte Position
- Fig. 12: vierte Position
- Fig. 13: fünfte Position
- Fig. 14: Passrohr
- Fig. 15: Montiertes Passrohr

Die Figuren sind stark schematisiert und nicht maßstabsgerecht und bilden die Wirklichkeit extrem vereinfacht und stilisiert ab.

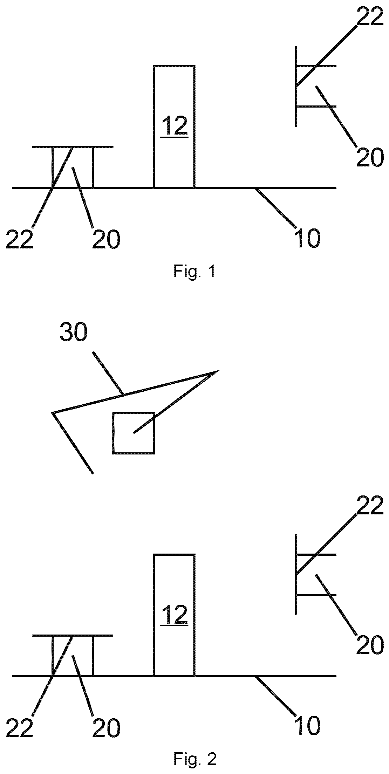

In Fig. 1 ist die Ausgangslage dargestellt. An einem Druckkörper 10 befinden sich zwei Rohre 20, jeweils mit einem Flansch 22 am Ende. Beispielsweise befinden sich die beiden Rohre 20 in unterschiedlichen Sektionen bei der Fertigung des Druckkörpers 10 und müssen nun über ein Passrohr 50 verbunden werden. Als Hindernis sei hier rein beispielhaft ein Spant 12 gezeigt.

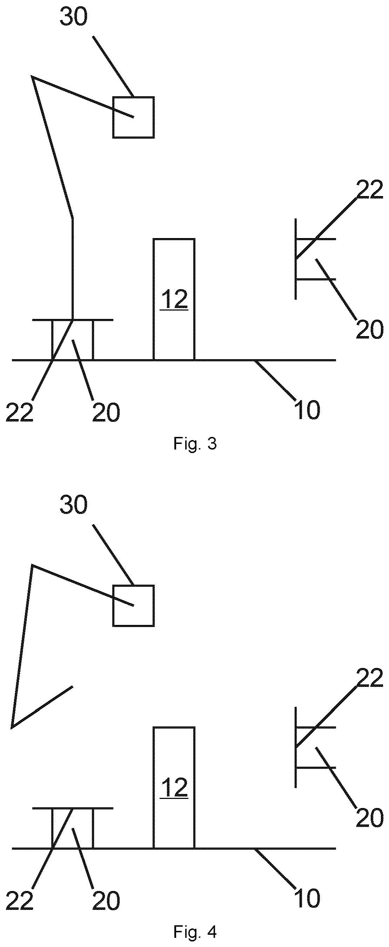

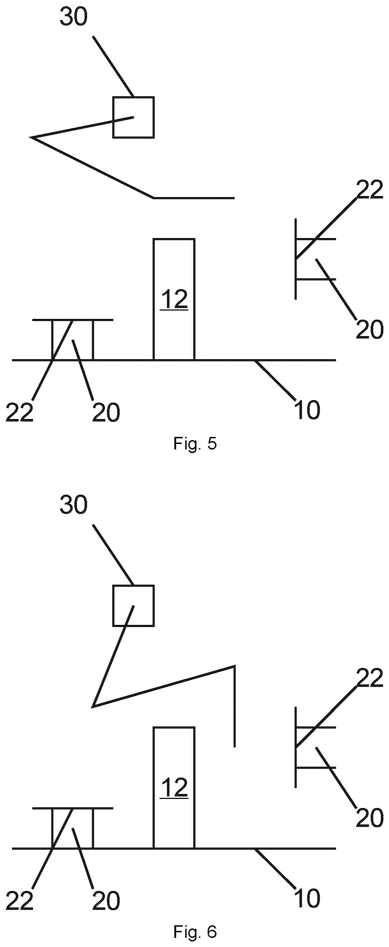

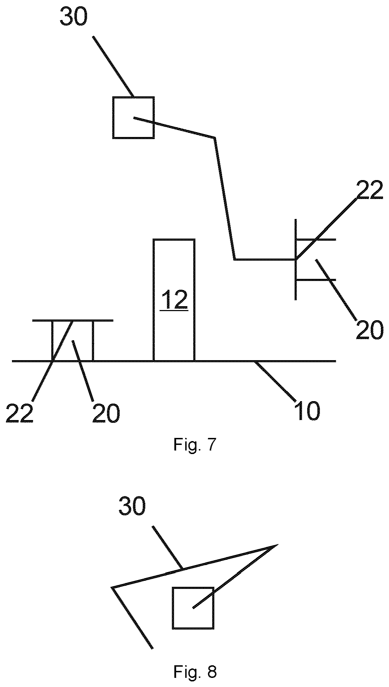

Fig. 2 zeigt das Einbringen des Roboters 30. Der Roboter fährt nun, wie in Fig. 3 gezeigte eine erste Position, in Fig. 4 gezeigt eine zweite Position, in Fig. 5 gezeigt eine dritte Position, in Fig. 6 gezeigte eine vierte Position und in Fig. 7gezeigt eine fünfte Position an. Aus diesen fünft Punkten mit den entsprechenden Gelenkwinkeln des Mehrgelenksarms ist die Bewegungskontur 40 beschrieben und damit die Form des zu fertigenden Passrohres 50 bekannt.

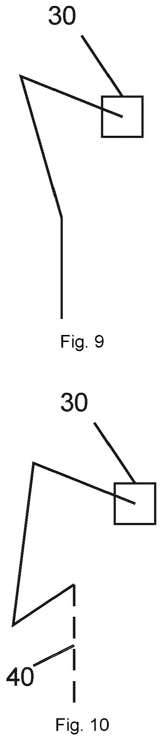

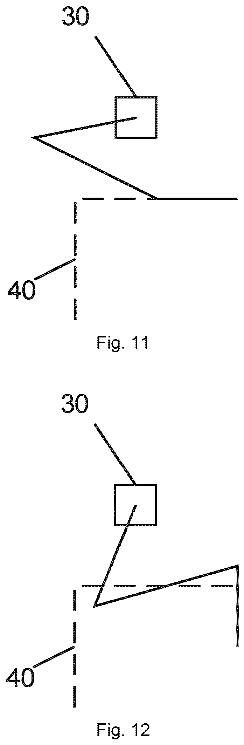

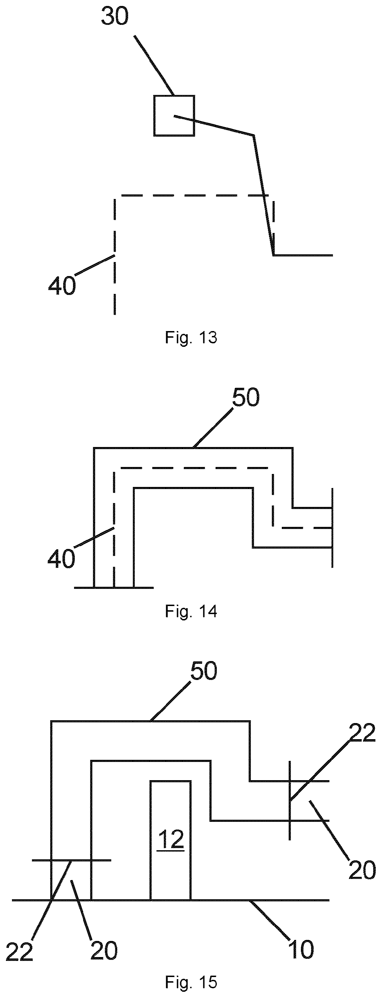

Der Roboter 30 wird nun aus dem Unterseeboot herausgeholt, wie in Fig. 8 dargestellt, und fährt wie in Fig. 9 gezeigt die erste Position, wie in Fig. 10 gezeigt die zweite Position, wie in Fig. 11 gezeigt die dritte Position, wie in Fig. 12 gezeigt die vierte Position und wie in Fig. 13 gezeigt die fünfte Position an. Dabei wird der Roboter 30 optisch erfasst und so auch die Bewegungskontur 40.

Nach der Bewegungskontur 40 kann nun das Passrohr 50 gefertigt werden, wie in Fig. 14 gezeigt. Dieses Passrohr 50 passt nun perfekt zwischen die Flansche 22, wie in Fig. 15 dargestellt.

### Bezugszeichen

- 10: Druckkörper
- 12: Spant
- 20: Rohr
- 22: Flansch
- 30: Roboter
- 40: Bewegungskontur
- 50: Passrohr

## Patentansprüche

1. Verfahren zur Herstellung eines Passrohres (50) bei der Fertigung eines Unterseebootes, wobei ein anlernfähiger Roboter (30) mit einem Mehrgelenksarm in das Innere des Unterseebootes verbracht und dort ortsfest montiert wird, wobei der Mehrgelenksarm zu einem ersten Endpunkt des Passrohres (50) und zu einem zweiten Endpunkt geführt wird, wobei der Roboter (30) dabei die Position und Orientierung des ersten Endpunktes und des zweiten Endpunktes erfasst, wobei das Passrohr (50) nach der Position und Orientierung des ersten Endpunktes und des zweiten Endpunktes gefertigt wird.

2. Verfahren nach Anspruch 1, **dadurch gekennzeichnet, dass** der Mehrgelenksarm von dem ersten Endpunkt des Passrohres (50) zum zweiten Endpunkt geführt wird, wobei der Roboter (30) dabei die Bewegungskontur (40) erfasst und als Verlaufsform des Passrohres (50) gespeichert wird, wobei das Passrohr (50) nach der erfassten Bewegungskontur (40) gefertigt wird.

3. Verfahren nach Anspruch 2, **dadurch gekennzeichnet, dass** der Mehrgelenksarm entlang weiterer Einbauten geführt wird, wobei der Roboter (30) dabei die Negativbewegungskontur (40) erfasst, wobei die Verlaufsform des Passrohres (50) derart angepasst wird, dass die Verlaufsform die Negativbewegungskontur (40) nicht berührt.

4. Verfahren nach Anspruch 1, **dadurch gekennzeichnet, dass** eine Sollform für das Passrohr (50) vorgegeben wird, wobei aus der Sollform und der exakten Position und Orientierung des ersten Endpunktes und des zweiten Endpunktes die reale Form des Passrohres ermittelt wird.

5. Verfahren nach einem der vorstehenden Ansprüche, **dadurch gekennzeichnet, dass** der Roboter (30) die erfasste Bewegungskontur (40) außerhalb des Unterseebootes nachfährt, wobei die Bewegung des Roboters (30) optisch erfasst wird, wobei aus der optisch erfassten Bewegung die Verlaufsform des Passrohres (50) erzeugt wird.

6. Verfahren nach einem der vorstehenden Ansprüche, **dadurch gekennzeichnet, dass** der Roboter (30) außerhalb des Unterseebootes an einem Schweißtisch den ersten Endpunkt anfährt, ein Schweißflansch am ersten Endpunkt montiert wird, der Roboter (30) den zweiten Endpunkt anfährt, ein Schweißflansch am zweiten Endpunkt montiert wird, wobei das Passrohr (50) zwischen den beiden Schweißflanschen hergestellt wird.

7. Verfahren nach einem der vorstehenden Ansprüche, **dadurch gekennzeichnet, dass** die Bewegungskontur (40) nur an nicht geraden Stellen des zu fertigenden Passrohres (50) erfasst wird.

8. Verfahren nach einem der vorstehenden Ansprüche, **dadurch gekennzeichnet, dass** als Bewegungskontur (40) oder der erste Endpunkt des Passrohres und der zweite Endpunkt des Passrohres die Gelenkwinkel des Mehrgelenksarms erfasst werden.

9. Verfahren nach einem der vorstehenden Ansprüche, **dadurch gekennzeichnet, dass** der Roboter (30) in passiver Weise zu einem dritten Endpunkt des Passrohres (50) geführt wird, wobei der Roboter (30) dabei exakte Position und Orientierung des dritten Endpunktes erfasst, wobei das Passrohr (50) nach der exakten Position und Orientierung des dritten Endpunktes gefertigt wird.

10. Verfahren nach einem der vorstehenden Ansprüche, **dadurch gekennzeichnet, dass** der Roboter (30) in passiver Weise zu einem Wegpunkt des Passrohres (50) geführt wird, wobei der Roboter (30) dabei exakte Position und Orientierung des Wegpunktes erfasst, wobei das Passrohr (50) nach der exakten Position und Orientierung des Wegpunktes gefertigt wird.

11. Verfahren nach einem der vorstehenden Ansprüche, **dadurch gekennzeichnet, dass** der Roboter (30) in passiver Weise zu einem Referenzpunkt geführt wird.

12. Verfahren nach einem der vorstehenden Ansprüche, **dadurch gekennzeichnet, dass** die Fertigung des Passrohres (50) manuell erfolgt und mittels erweiterter Realität unterstützt wird.

13. Verfahren nach einem der vorstehenden Ansprüche, **dadurch gekennzeichnet, dass** ein weiterer anlernfähiger Roboter (30) mit einem Mehrgelenksarm verwendet wird, wobei der anlernfähige Roboter (30) und der weitere anlernfähige Roboter (30) über zumindest einen gemeinsamen Berührungspunkt die relative Anordnung zueinander erfassen und wobei der anlernfähige Roboter (30) zumindest die Position und Orientierung des ersten Endpunktes und der weitere anlernfähige Roboter (30) zumindest die Position des zweiten Endpunktes erfasst.
